# EUROPEAN PATENT APPLICATION

(11) **EP 2 700 862 A1**
(43) Date of publication of application: **26.02.2014**
(21) Application number: 12181262.2
(22) Date of filing: 21.08.2012
(51) Int. Cl.: F16L 23/10

(54) **Clamping collar**

(71) Applicant: Teconnex Ltd, Keighley, BD21 4LG (GB)
(72) Inventor: Green, Richard, Bradford, BD21 4LG (GB)
(74) Representative: Tomkinson, Alexandra

(57) **Abstract**

Clamping means (2) are provided that include a strap (4) having first and second strap ends (6, 8). First and second receiving means (10, 12) are provided adjacent each of the first and second strap free ends respectively for receiving first and second trunnion or cross piece means (16, 18). The clamping means further include attachment means (14) on which the first and second trunnion or cross piece means are provided. The attachment means (14) are located between said first and second strap free ends (6, 8) and have adjustment means (36) provided therewith for allowing the distance between the first and second strap free ends and/or the first and second trunnion or cross piece means to be adjusted in use. The adjustment means (36) are located at or between an end of the attachment means (14) and the first trunnion or cross piece means (16) and opposite to the end adjacent which the second trunnion or cross piece means (18) is provided. The second trunnion or cross piece means (18) is securely mounted to or within the receiving means (12) of the second strap free end and the first trunnion or cross piece means (16) is detachably attached to the receiving means (10) of the first strap free end.

## Description

This invention relates to clamping means and a method of use thereof.

It is known to provide clamping means of a type commonly called a quick release clamp. This clamp is typically used to clamp any two or more surfaces or items together, such as for example for clamping two end flanged conduits together to form a single continuous conduit unit. The quick release clamp, in one example, includes a number of spaced apart inner clamping segments with an outer strap joining the segments together. The outer strap is almost annular in form but has a gap between the first and second strap free ends thereof. Each of the first and second strap free ends has a trunnion or cross piece receiving loop for retaining a trunnion or cross piece therein in use. A bolt including a threaded elongate portion and a bolt head is provided and first and second trunnions or cross pieces are provided on the threaded elongate portion. The trunnions or cross pieces are typically located substantially transverse to the longitudinal axis of the threaded elongate portion. The first trunnion or cross piece is located adjacent the bolt head and/or tensioning means and is permanently trapped in the receiving loop of the first strap free end in use and cannot be removed therefrom. The second trunnion or cross piece is located a spaced distance apart from the first trunnion at an end of the bolt opposite to the bolt head/tensioning means end. The second trunnion or cross piece is releasably attached to the receiving loop of the second strap free end. The receiving loop of the second strap free end is typically provided with an enlarged aperture defined therein to allow releasable attachment of the second trunnion or cross piece therewith in use.

When the clamp is fitted to the ends of two items that are to be joined together, the second trunnion or cross piece is disengaged from the receiving loop of the second strap free end so that the strap can be expanded as required to locate around the exterior surface of the two items. Once the clamp is in position, the second trunnion or cross piece is moved into engagement with the receiving loop of the second strap free end. Tensioning means, such as for example a nut, provided between the bolt head and the first trunnion or cross piece is then tightened to firmly secure the second trunnion or cross piece in place in the receiving loop of the second strap free end and thus secure the clamp on the two items. A problem associated with this known quick release clamp is that the second trunnion or cross piece and the second strap free end are typically located further away from the fitter compared to the first trunnion or cross piece and first strap free end and therefore the second trunnion or cross piece and the receiving loop of the second strap free end are often not in clear view of the fitter. As such, the fitter cannot see whether the second trunnion or cross piece is securely and correctly engaged with the receiving loop of the second strap free end in use. In addition, the second trunnion or cross piece has a tendency to rotate and move out of correct engagement with the receiving loop of the second strap end, and the fitter is often not able to see that this has happened.

It is therefore an aim of the present invention to provide clamping means that overcomes the abovementioned problem.

It is a further aim of the present invention to provide a method of using clamping that overcomes the abovementioned problem.

According to a first aspect of the present invention there is provided clamping means including a strap having first and second strap ends, first and second receiving means are provided adjacent each of the first and second strap free ends respectively for receiving first and second trunnion or cross piece means, the clamping means further including attachment means on which the first and second trunnion or cross piece means are provided, said attachment means located between said first and second strap free ends and having adjustment means provided therewith for allowing the distance between the first and second strap free ends and/or the first and second trunnion or cross piece means to be adjusted in use, the adjustment means located at or between an end of the attachment means and the first trunnion or cross piece means and opposite to the end adjacent which the second trunnion or cross piece means is provided, **characterised in that** the second trunnion or cross piece means is securely mounted to or within the receiving means of the second strap free end and the first trunnion or cross piece means is detachably attached to the receiving means of the first strap free end.

Thus, the present invention provides a clamping means wherein a releasable trunnion or cross piece means is provided adjacent the adjustment end or first strap free end of the clamping means. This is the end closest to the fitter. As such, the fitter can more easily see whether the releasable trunnion or cross piece means is correctly fitted in the receiving means, whilst allowing easy access to the adjustment means for adjusting the clamping means. This is in contrast to prior art clamping means wherein the releasable trunnion or cross piece means is provided at the end opposite the adjustment end adjacent the second strap free end of the clamping means.

Preferably the strap is shaped or can be moved such that the first and second strap free ends are substantially opposite to each other in use.

In the one embodiment the strap is substantially annular or "near annular" in form. The term "near annular" relates to a strap or strap portions that is/are almost annular in form but which has/have a gap between the first and second strap free ends. The size of the gap can be adjusted to allow the clamping means to be fitted around different sized items to be clamped.

In one embodiment the strap directly engages two or more items being clamped in use. In an alternative embodiment the strap indirectly engages two or more items being clamped in use via one or more segments.

In one embodiment one or more segments are associated with or attached to or between the strap, two or more strap portions and/or strap free ends. Preferably the one or more segments are located on an inner surface of the strap, strap portions and/or strap free ends and, in one embodiment, are typically located against the outer surfaces of two or more items being clamped in use.

Preferably a substantially continuous strap can be provided or a plurality of strap portions can be provided that are joined directly or indirectly together and/or to one or more segments.

Preferably the clamping means can be moved between a first clamped position, wherein the first and second trunnion or cross piece means are both engaged in the first and second receiving means respectively, and an unclamped position, wherein the first trunnion or cross piece means is disengaged from the first receiving means and the second trunnion or cross piece means remains engaged or securely mounted with the second receiving means.

In the unclamped position, the second trunnion or cross piece means that remains engaged or securely mounted with the second receiving means is typically rotatably or pivotably movable with respect to the second receiving means. This allows the first trunnion or cross piece means to be moved clear of the first receiving means in use.

Preferably the first and/or second receiving means are in the form of one or more loops or hooks located adjacent the first and second strap free ends respectively.

Preferably each of the first and second receiving means include two loop or hook sections with an aperture or slot located between said two loop or hook sections. The aperture or slot is typically of such shape and/or dimensions to allow the attachment means to locate or pass therethrough in use.

Preferably the aperture or slot of the first receiving means has an enlarged portion and/or widening taper defined to allow releaseable engagement of the first trunnion or cross piece means therewith in use. Movement of the first trunnion or cross piece means from a narrower part of the aperture to slot of the first receiving means to a wider part allows release of the first trunnion or cross piece means from the first receiving means. The movement of the first trunnion or cross piece means between the narrower and wider parts of the aperture or slot is typically via manual manipulation by a user.

Preferably the first and/or second trunnion or cross piece means is/are movably mounted on or with respect to the attachment means. Movement of the first and/or second trunnion or cross piece means on or with respect to the attachment means allows the distance between the trunnion or cross piece means and/or the first and second free strap ends to be adjusted in use, thereby allowing adjustment of the clamping pressure of the clamping means.

Preferably the attachment means is in the form of an elongate member.

In one embodiment the elongate member or attachment means has a screw thread, such as for example an external screw thread, that is substantially complementary to a screw thread, such as for example an internal screw thread, provided on a portion of the first and/or second trunnion or cross piece means. The first and/or second trunnion or cross piece means are rotatably mounted on the elongate member or attachment means via the complementary screw threads.

The elongate member or attachment means with a screw thread can be in the form of a T-bolt, bolt and/or the like.

In one embodiment the adjustment or tensioning means are movably mounted on or with respect to said elongate member or attachment means to allow the distance between the first and second strap free ends to be adjusted. The adjustment means could be slidably, pivotably and/or rotatably mounted on said elongate member or attachment means.

In one embodiment the adjustment means are rotatably mounted on said elongate member or attachment means. Further preferably the adjustment means is provided with an internal screw thread that is rotatably mounted on a substantially complementary external screw thread on said elongate member or attachment means.

In one embodiment the adjustment means is in the form of a nut and further preferably said nut is rotatably mounted on the screw thread of the elongate member or attachment means. The nut is provided at or between an end of the elongate member or attachment means and the first trunnion or cross piece means and opposite to the end adjacent which the second trunnion or cross piece means is provided.

In one embodiment the adjustment means is in the form of a bolt head with engagement means defined thereon to allow engagement of a tool therewith to allow rotation of said bolt head and/or said elongate member or attachment means relative to said first and/or second trunnion or cross piece means.

In one embodiment guide means are associated with at least the first trunnion or cross piece means. The guide means can be used for retaining the first trunnion or cross piece means to the elongate member or attachment means and/or the adjustment means, such as for example a T-bolt, bolt head, nut and/or the like in use. In addition to, or alternatively, the guide means can be used for preventing the first trunnion or cross piece means from twisting relative to the second trunnion or cross piece means and/or receiving means in use.

In a preferred embodiment the guide means is in the form of an elongate plate or substantially flat member. Preferably the elongate plate or flat member is of such shape and/or dimensions to allow the same to be located in or through the aperture or slot of the first and/or second receiving means.

Preferably the guide means are resiliently biased in a direction towards the elongate member or attachment means on which the first and second trunnion or cross piece means are provided. In one example the guide means is in the form of a sprung metal to provide said resilient biasing force.

In one embodiment an end of the guide means adjacent the second trunnion or cross piece means is typically a free or unattached end and is preferably movable relative to said second trunnion or cross piece means.

Preferably a portion of the guide means associated with the first trunnion or cross piece means is attached to or integrally formed with the first trunnion or cross piece means.

The guide means could be attached to the first trunnion or cross piece means and/or the elongate member or attachment means via welding, one or more clips, adhesive, ties, inter-engaging members and/or the like.

Preferably at least a part of the guide means is located over an end of the elongate member, attachment means and/or adjustment means, such as for example over an end of the T-bolt, bolt head, nut and/or the like.

According to a second aspect of the present invention there is provided a method of using clamping means, said clamping means including a strap having first and second strap ends, first and second receiving means provided adjacent each of the first and second strap free ends respectively, the clamping means further including attachment means on which the first and second trunnion or cross piece means are provided, said attachment means located between said first and second strap free ends and having adjustment means provided therewith, the adjustment means located at or between an end of the attachment means and the first trunnion or cross piece means and opposite to the end adjacent which the second trunnion or cross piece means is provided, said second trunnion or cross piece means securely mounted to or within the receiving means of the second strap free end, said method including the steps of locating the clamping means around two or more items to be clamped together, moving the first trunnion or cross piece means into engagement with the first receiving means of the first strap free end, and adjusting the adjustment means to allow the distance between the first and second strap free ends and/or first and second trunnion or cross piece means to be moved a required distance such that clamping of the two items with the clamping means can take place.

Preferably the above method is undertaken in reverse in order to release the clamping means from the two items being clamped.

The second trunnion or cross means is securely mounted on or within the second receiving means in that it is substantially fixedly or permanently secured to the second receiving means so that it cannot be easily removed from the second receiving means and is substantially trapped therein. However, it is to be noted that the second trunnion or cross piece means can still be movable relative to the second receiving means when in the trapped position. For example, it can remain trapped with the second receiving means but be rotatably movable relative to said second receiving means.

The term "trunnion" or cross piece means typically refers to any connection device that can engage with receiving means provided at the strap free ends of the clamp. For example, the connection device can include one or more protrusion or end elements that can engage with receiving means provided at the strap free ends. The first trunnion or cross piece means is typically any connection device that can be moved into an out of engagement with first receiving means. The second trunnion or cross piece means is typically any connection device that can remain in engagement with the second receiving means and that preferably is pivotable or rotatably movable with respect to the second receiving means.

The longitudinal axis or axis of pivot/rotation of the trunnion, cross piece means or connection device is located substantially transverse to the longitudinal axis of the elongate member or attachment means.

Embodiments of the present invention will now be described with reference to the accompanying figures, wherein:
Figure 1a is a perspective view of clamping means according to a first embodiment of the present invention in a clamped position;
Figure 1b is a perspective of the clamping means in figure 1a in an unclamped position;
Figure 1c is an enlarged end view of the bolt of the clamping means in figure 1a;
Figure 1d is an enlarged end view of the bolt of the clamping means in figure 1b;
Figure 2a is a perspective view of clamping means according to a second embodiment of the present invention in a clamped position;
Figure 2b is a perspective view of the clamping means in figure 2a in an unclamped position;
Figure 2c is an enlarged end view of the bolt and nut of the clamping means in figure 2a;
Figure 2d is an enlarged end view of the bolt and nut of the clamping means in figure 2b;
Figure 3a is a perspective of the clamping means based on the first embodiment in a clamped position with a guide finger provided according to a third embodiment of the present invention;
Figure 3b is a perspective view of the clamping means in figure 3b in an unclamped position;
Figure 3c is an enlarged side view of a first trunnion in figure 3a with the guide finger attached to the same;
Figure 3d is an enlarged side view of a first trunnion based on the second embodiment wherein the adjustment means includes a nut and bolt arrangement and a guide finger;
Figure 3e is an enlarged end view from the second cross piece of the arrangement shown in figure 3a;
Figure 3f is an enlarged end view of the guide finger and bolt arrangement shown in figure 3a;
Figure 3g is an enlarged end view of the guide finger and nut and bolt arrangement shown in figure 3h; and
Figure 3h is a perspective view of a guide finger and nut and bolt arrangement in a clamped position.

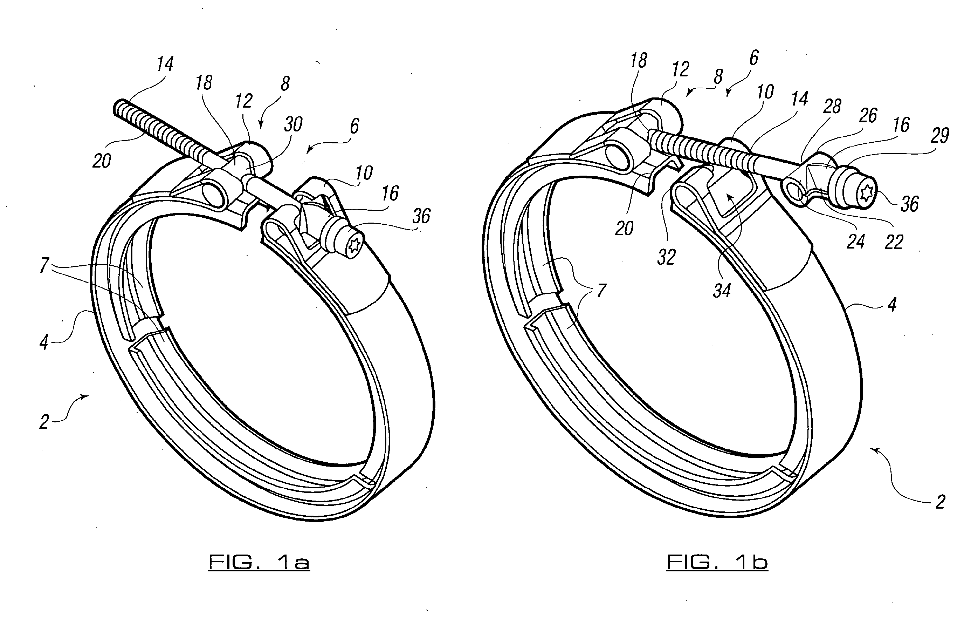

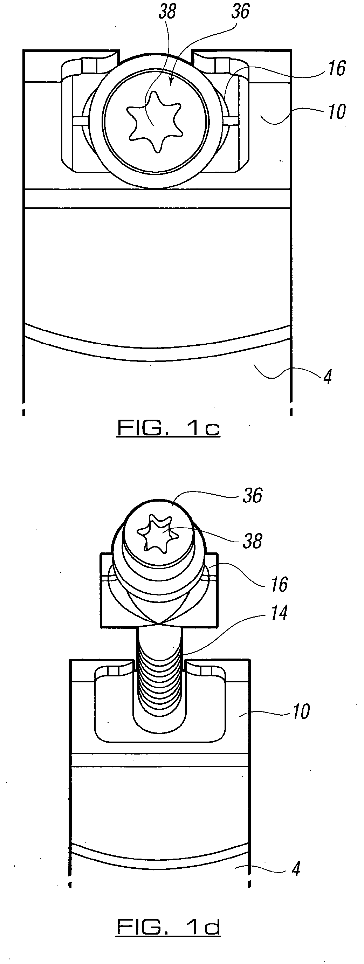

Referring firstly to figures 1a-1d, there is illustrated a quick release clamp 2 according to a first embodiment of the present invention.

Clamp 2 includes a near annular clamp strap 4 having a first strap free end 6 and a second strap free end 8. A plurality of clamping segments 7 are provided on an inner surface of the clamping strap 4 and are arranged to engage the surfaces of two or more items being clamped in use. The clamping segments are curved or arc shaped in form and are arranged a spaced distance apart on the inner surface of the clamp strap 4. The gap between the first and second strap free ends 6, 8 can be adjusted to allow the diameter of the annular clamping strap to be adjusted, thereby allowing the clamp 2 to be fitted to different flanged or dimensioned items.

Trunnion or cross piece receiving means in the form of a first loop 10 is provided adjacent first strap free end 6. Trunnion or cross piece receiving means in the form of a second loop 12 is provided adjacent second strap free end 8. An aperture is defined centrally of the first and second loops 10, 12 to allow attachment means in the form of an elongate member 14 to be located therethrough in use. The longitudinal axis of the elongate member 14 is typically substantially transverse to the longitudinal axis of the loops 10, 12.

The elongate member 14 is in the form of a threaded bolt having adjustment means in the form of a bolt head 36 located at a first end thereof. The bolt head 36 has engagement means in the form of a shaped aperture 38 to allow a tool, such as for example a screwdriver, to be located therein for adjusting the position of a first trunnion 16 and/or second cross piece 18 located on the elongate member. It will be appreciated that the first trunnion 16 can be any connection device or cross piece member as previously described herein and the second cross piece 18 could be any trunnion or connection device as previously described herein.

The threaded bolt has an external screw thread 20 defined thereon on which a complementary internal screw thread provided in first trunnion 16 and/or second cross piece 18 is rotatably mounted. As such, the position of the first and/or second trunnion/cross piece 16, 18 on the threaded bolt can be adjusted. Adjustment of the position of the first and/or second trunnion/cross piece with respect to each on the threaded bolt allows the distance between the first and second strap free ends 6, 8 to be adjusted.

In the illustrations, first trunnion 16 includes a central body portion 22 having first and second protrusion portions 24, 26 extending outwardly and substantially transversely from an end 28 of body portion 22. A channel is defined in central body portion 22 and the longitudinal axis of the channel is substantially parallel to the longitudinal axis of the body portion and substantially transverse to the protrusion portions 24, 26. The internal surface of the channel defined in body portion 22 has a screw thread provided thereon to allow threaded engagement with the external screw thread of bolt 14. The openings to the channel are defined at opposite ends 28, 29 of central body portion 22 to allow the bolt to pass through the same in use. In the illustrations, end 29 of the first trunnion 16 is provided in abutting relationship with bolt head 36 and the elongate bolt 14 extends from the other end 28 of first trunnion 16.

Second cross piece 18 includes a body portion 30 with an aperture or channel defined substantially centrally through the body portion 30, the longitudinal axis of the aperture or channel substantially transverse to the longitudinal axis of body portion 30. At least part of body portion 30 is in threaded engagement with the external screw thread of bolt 14 to allow second cross piece 18 to move relative to the longitudinal axis of bolt 14.

In accordance with the present invention, second cross piece 18 is securely mounted or trapped in second loop 12 so that it cannot be easily removed therefrom. An aperture defined centrally of loop 12 allows the elongate member 14 to pass therethrough in use. First trunnion 16 is releasably connected in first loop 10 to allow the clamp 2 to be moved between the clamped position, as shown in figure 1a, to the unclamped position, as shown in figure 1b. In particular, the aperture 32 defined centrally of loop 10 has an enlarged portion 34 to allow release of protrusions 24, 26 from said aperture 32 to form the unclamped position.

Annular strap member 4 may have a resilient bias such that first and strap free ends are biased away from each other when in the unclamped position.

With the first trunnion in the unclamped position, the second cross piece 18 can be rotatably moved about an axis substantially parallel to the longitudinal axis of body portion 30 and substantially transverse to the longitudinal axis of bolt 14, thereby allowing rotation of bolt 14 and first trunnion 16 between the clamped and unclamped positions.

The second cross piece 18 is located at or adjacent the end of bolt 14 opposite to the bolt head 36. It will be appreciated that either or both the first and second trunnion/cross piece 16, 18 can be movably mounted on bolt 14 as required.

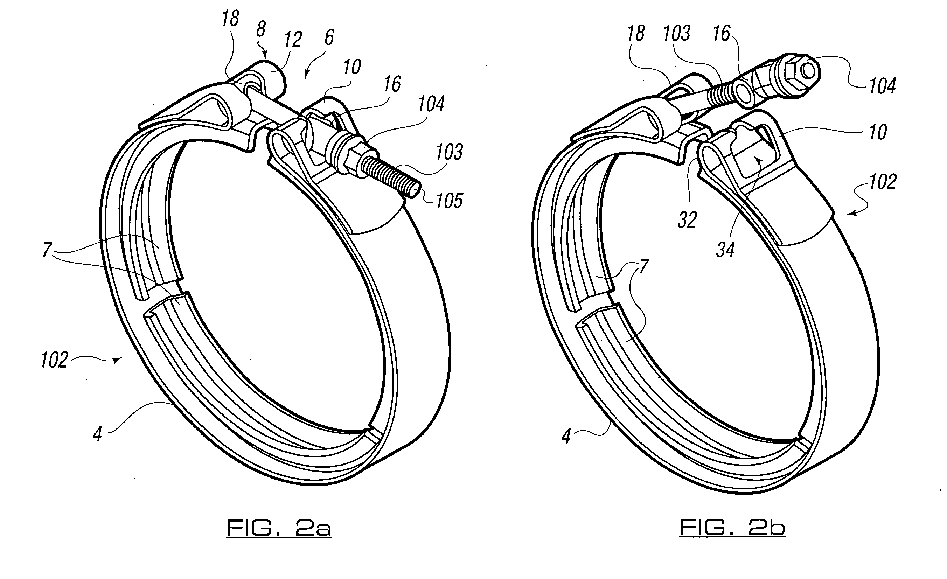

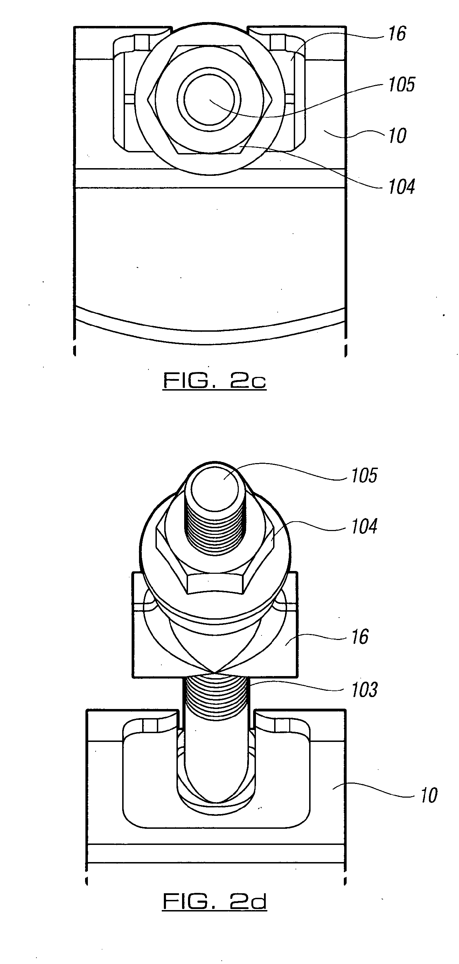

Referring to figures 2a-2d, there is illustrated a quick release clamp 102 according to a second embodiment of the present invention. In this embodiment, the attachment means is in the form of a bolt 103 with external screw thread and the adjustment means include a nut 104 to allow the distance between the strap free ends to be adjusted. In addition, the second cross piece 18 in this example is shown as a trunnion. The nut 104 is rotatably mounted on the screw thread of bolt 103 and is provided between the end 105 of bolt 103 and the first trunnion 16. The same reference numerals have been used to define the same features as in figures 1a-1d. The first trunnion 16 is releasably engaged with the first strap free end 10 as in figures 1a-1d.

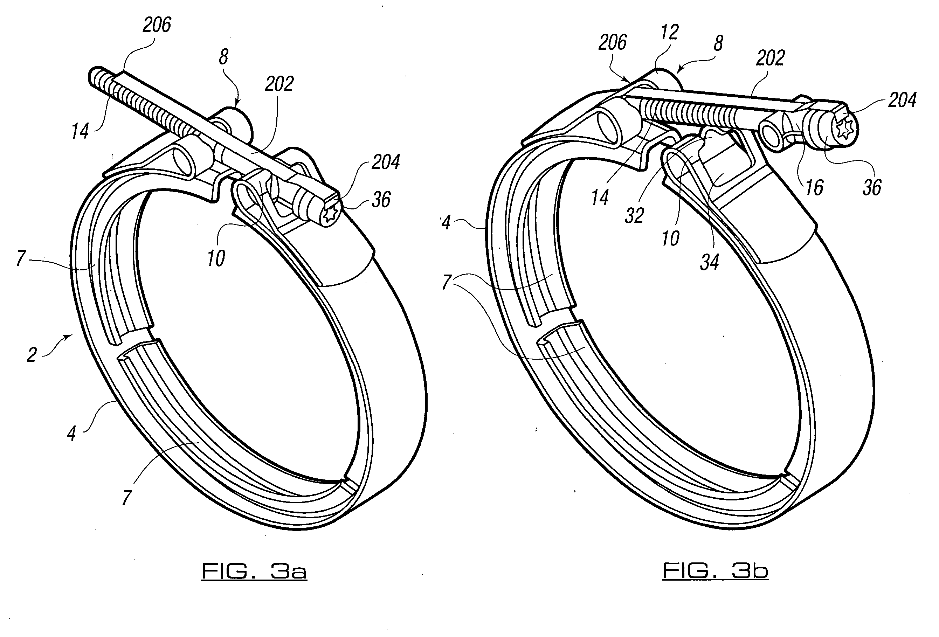

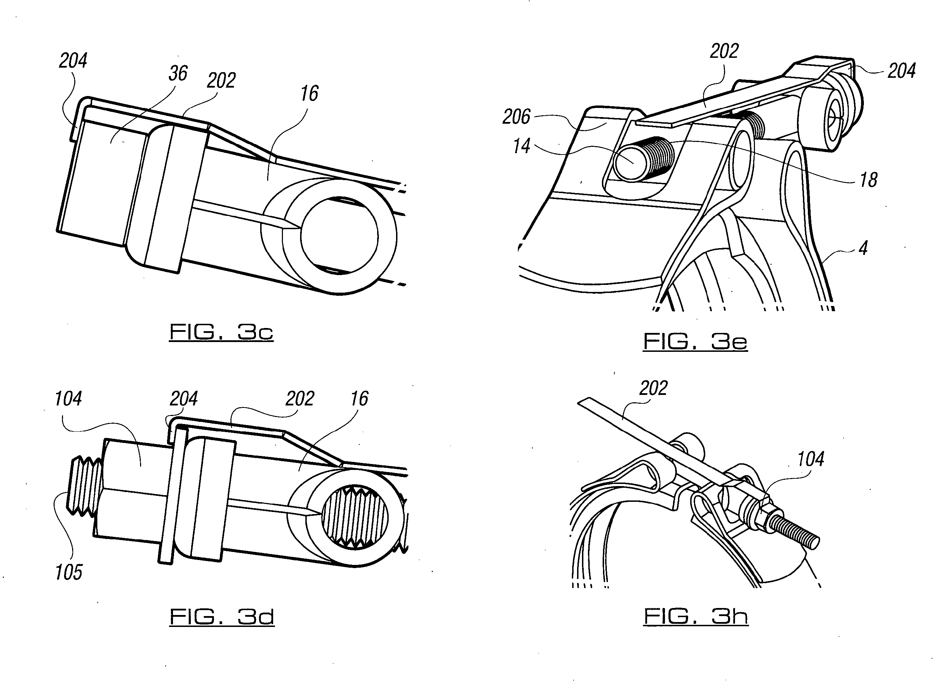

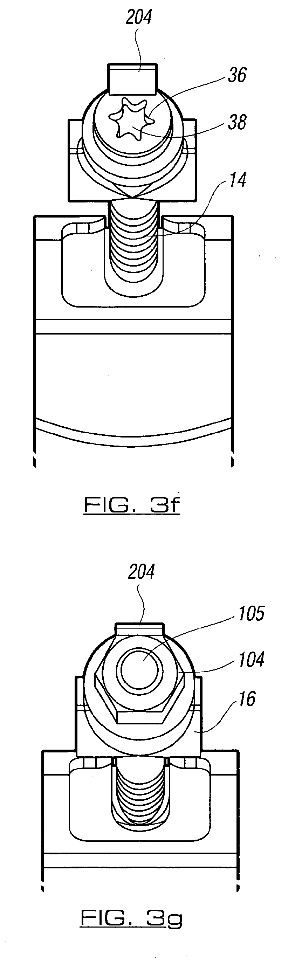

Referring to figures 3a-3h, there is illustrated a further embodiment of the present invention in which guide means in the form of a guide finger 202 is provided to retain engagement of the first trunnion 16 to the bolt head 36 or nut 104. In addition, the guide finger 202 helps to prevent the first trunnion 16 from twisting relative to the second trapped trunnion/cross piece or second strap free end 8.

The guide finger 202 is typically an elongate and substantially flat plate that is attached to or integrally formed with the first trunnion 16. For example, the guide finger 202 could be attached to the first trunnion via welding. The end 204 of the guide finger 202 that is attached to or integrally formed with the first trunnion 16 is also attached to the bolt head 36 or nut 104. In the illustration, end 204 is in the form of a clip that engages with a part of the bolt head 36 or nut 104. The other end 206 of guide finger 202 is typically a free end. The guide finger 202 has a degree of resilience to limit rotation between the first and second trunnion/cross piece 16,18.

## Claims

1. Clamping means including a strap having first and second strap ends, first and second receiving means are provided adjacent each of the first and second strap free ends respectively for receiving first and second trunnion or cross piece means, the clamping means further including attachment means on which the first and second trunnion or cross piece means are provided, said attachment means located between said first and second strap free ends and having adjustment means provided therewith for allowing the distance between the first and second strap free ends and/or the first and second trunnion or cross piece means to be adjusted in use, the adjustment means located at or between an end of the attachment means and the first trunnion or cross piece means and opposite to the end adjacent which the second trunnion or cross piece means is provided, **characterised in that** the second trunnion or cross piece means is securely mounted to or within the receiving means of the second strap free end and the first trunnion or cross piece means is detachably attached to the receiving means of the first strap free end.

2. Clamping means according to claim 1 wherein the strap is shaped or can be moved such that the first and second strap free ends are substantially opposite to each other, is substantially annular or is "near annular" in form.

3. Clamping means according to claim 1 wherein one or more segments are associated with, attached to or provided between the strap, two or more strap portions and/or strap free ends and/or are located on an inner surface or surfaces of the strap, two or more strap portions and/or between the strap free ends.

4. Clamping means according to claim 1 wherein said clamping means can be moved between a first clamped position, wherein the first and second trunnion or cross piece means are both engaged in the first and second receiving means respectively, and an unclamped position, wherein the first trunnion or cross piece means is disengaged from the first receiving means and the second trunnion or cross piece means remains engaged or securely mounted with the second receiving means.

5. Clamping means according to claim 4 wherein the second trunnion or cross piece means that remains engaged or securely mounted with the second receiving means is rotatably or pivotably movable with respect to the second receiving means in the unclamped position.

6. Clamping means according to claim 1 wherein the first and/or second receiving means are in the form of one or more loops or hooks, or two loop or hook sections with an aperture or slot located between said loop or hook sections to allow the attachment means to located or pass through said aperture or slot in use.

7. Clamping means according to claim 1 wherein the first and/or second trunnion or cross piece means is/are movably mounted on or with respect to the attachment means.

8. Clamping means according to claim 7 wherein the attachment means has a screw thread that is substantially complementary to a screw thread provided on a portion of the first and/or second trunnion or cross piece means to allow the first and/or second trunnion or cross piece means to be rotatably mounted on the attachment means.

9. Clamping means according to claim 1 wherein the adjustment means are movably mounted on or with respect to said attachment means to allow the distance between the first and second strap free ends to be adjusted in use.

10. Clamping means according to claim 1 wherein the adjustment means is provided with an internal screw thread that is rotatably mounted on a substantially complementary external screw thread provided on said attachment means, is in the form of a nut or is in the form of a bolt head with engagement means defined thereon to allow engagement of a tool therewith.

11. Clamping means according to claim 1 wherein guide means are associated with at least the first trunnion or cross piece means for retaining the first trunnion or cross piece means to the attachment means or adjustment means in use and/or for preventing the first trunnion or cross piece means from twisting relative to the second trunnion or cross piece means and/or receiving means in use.

12. Clamping means according to claim 11 wherein the guide means are in the form of an elongate plate or substantially flat member.

13. Clamping means according to claim 11 wherein the guide means are resiliently biased in a direction towards the attachment means.

14. Clamping means according to claim 11 wherein a portion of the guide means associated with the first trunnion or cross piece means is attached to or integrally formed with the first trunnion or cross piece means, and an end of the guide means adjacent the second trunnion or cross piece means is a free or unattached end.

15. A method of using clamping means, said clamping means including a strap having first and second strap ends, first and second receiving means provided adjacent each of the first and second strap free ends respectively, the clamping means further including attachment means on which the first and second trunnion or cross piece means are provided, said attachment means located between said first and second strap free ends and having adjustment means provided therewith, the adjustment means located at or between an end of the attachment means and the first trunnion or cross piece means and opposite to the end adjacent which the second trunnion or cross piece means is provided, said second trunnion or cross piece means securely mounted to or within the receiving means of the second strap free end, said method including the steps of locating the clamping means around two or more items to be clamped together, moving the first trunnion or cross piece means into engagement with the first receiving means of the first strap free end, and adjusting the adjustment means to allow the distance between the first and second strap free ends and/or first and second trunnion or cross piece means to be moved a required distance such that clamping of the two items with the clamping means can take place.
